(19) **Europäisches Patentamt / European Patent Office / Office européen des brevets**

(11) **EP 4 545 928 A1**

(12) **EUROPÄISCHE PATENTANMELDUNG**

(43) Veröffentlichungstag:
**30.04.2025 Patentblatt 2025/18**

(21) Anmeldenummer: **23206431.1**

(22) Anmeldetag: **27.10.2023**

(51) Internationale Patentklassifikation (IPC):
**G01M 13/021** (2019.01) **G01M 13/028** (2019.01)
**G01N 29/14** (2006.01)

(52) Gemeinsame Patentklassifikation (CPC):
**G01M 13/021; G01M 13/028; G01N 29/14;**
**G01N 29/4436; G01N 29/449;** G01N 2291/2696

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Innomotics GmbH**
**90441 Nürnberg (DE)**

(72) Erfinder:
• **Horcher, Daniel**
**96103 Hallstadt (DE)**
• **Krauleidis, Peter**
**97792 Riedenberg (DE)**
• **Strobel, Samuel**
**91052 Erlangen (DE)**

(74) Vertreter: **Siemens Patent Attorneys**
**Postfach 22 16 34**
**80506 München (DE)**

(54) **ERKENNEN UND LOKALISIEREN EINES VERZAHNUNGSSCHADENS AN EINER VERZAHNUNG**

(57) Die Erfindung betrifft ein Verfahren zum Erkennen eines Verzahnungsschadens an mindestens einer Verzahnung (1, 2, 3), u.a. mit den Schritten:
- ein Bilden (S2) eines Cepstrums des Sensorsignals,
- ein Bestimmen (S3) von charakteristischen Quefrenzwerten des Cepstrums,
wobei die charakteristischen Quefrenzwerte jene Werte des Cepstrums im Quefrenzbereich angeben, an welchen das erste Zahnrad und das zweite Zahnrad an derselben Stelle ineinandergreifen,

- ein Definieren (S4) von jeweils einem Quefrenzband um die charakteristischen Quefrenzwerte des Cepstrums,
- ein Bilden (S5) von jeweils einem skalaren Funktionswert ($I_{Cepstrum}$) für die charakteristischen Quefrenzwerte, und
- ein Erkennen (S6) des Verzahnungsschadens an der mindestens einen Verzahnung (1, 2, 3), jeweils durch ein Vergleichen des skalaren Funktionswerts ($I_{Cepstrum}$) mit mindestens einem Vergleichswert.

FIG 2

**Beschreibung**

Unabhängig vom grammatikalischen Geschlecht eines bestimmten Begriffes sind Personen mit männlicher, weiblicher oder anderer Geschlechteridentität mit umfasst.

HINTERGRUND DER ERFINDUNG

Gebiet der Erfindung

Die vorliegende Erfindung betrifft ein Verfahren zum Erkennen eines Verzahnungsschadens an mindestens einer Verzahnung. Außerdem betrifft die Erfindung ein Computerprogrammprodukt und ein computerlesbares Medium.

Beschreibung des Stands der Technik

Bei einer Montage von einem Motor, einem Getriebemotor, einem Antrieb, und/oder einem Getriebe als auch bei der Assemblierung eines Getriebes selbst kommt es häufig zur Schädigung der Verzahnung von Getriebe und Motor. Lokale Verzahnungsschäden entstehen hierbei durch das direkte Aufeinandertreffen der Zahnköpfe von Zahnrad und Ritzel der Verzahnung im Rahmen des Zusammenbaus bei der Montage. Dies stellt ein Problem dar, denn schadhafte Teile, wie insbesondere Zahnräder mit lokalen Verzahnungsschäden müssen bei der Endprüfung identifiziert werden, um repariert werden zu können.

Eine Endprüfung von Getriebemotoren erfolgt in vielen Fällen mittels manueller subjektiver Geräuschbeurteilung. Das Ergebnis der Beurteilung ist stark vom subjektiven Empfinden eines Werkers abhängig und die Lokalisierung des geschädigten Zahns ist von der Erfahrung des Werkers abhängig. Der Prüfprozess mittels subjektiver Geräuschbeurteilung kann ausschließlich mithilfe des geschulten Werkers stattfinden und ist nicht automatisierbar.

Automatisierte Endprüfungen erfolgen bisher mithilfe von Beurteilungen der spektralen Kurtosis sowie durch Hüllkurven-Spektralanalysen unter Verwendung von akustischen Schwingungssensoren (PT5984 DE). Die Verfahren des Stands der Technik beruhen auf der Zuordnung von Frequenzen zu charakteristischen Merkmalen des Schadens. Diese Frequenzen können sich jedoch überlagern, sodass eine Trennung im Frequenzbereich nicht möglich ist. Die automatisierte Zuordnung des Schadens zum defekten Teil ist bei mehrstufigen Getrieben ohne umfangreiche Trainingsdatensätze für jedes Schadenszenario bisher nicht möglich.

Die Aufgabe der Erfindung besteht darin, eine Lösung für eine verbesserte Erkennung von schadhaften Teilen an Verzahnungen bereitzustellen.

ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Erkennen eines Verzahnungsschadens an mindestens einer Verzahnung,
wobei die mindestens eine Verzahnung ein ineinandergreifendes Zahnradpaar aufweist, wobei das Zahnradpaar ein erstes Zahnrad und ein zweites Zahnrad aufweist, wobei das erste Zahnrad eine erste Anzahl an Zahnrädern aufweist und wobei das zweite Zahnrad eine zweite Anzahl an Zahnrädern aufweist, mit den Schritten:

- Ein Erfassen eines Sensorsignals ($x(t)$) (insbesondere über eine Zeiteinheit ($t$)) während die mindestens eine Verzahnung mit einer (quasi) konstanten (auch als stationären bezeichenbar) Drehzahl betrieben wird, (d.h. insbesondere auch "angetrieben wird" und/oder "sich in Rotation befindet")
- ein Bilden eines Cepstrums des Sensorsignals,
- ein Bestimmen (d.h. insbesondere auch ein Berechnen und/oder ein Abrufen) von charakteristischen Quefrenzwerten ($q_c$) des Cepstrums ($X$),

   wobei die Quefrenzwerte ($q_c$) auch als Frequenzwerte im Quefrenzbereich bezeichenbar sind, wobei die charakteristischen Quefrenzwerte ($q_c$) jene Werte des Cepstrums ($X$) im Quefrenzbereich angeben, an welchen das erste Zahnrad und das zweite Zahnrad an derselben Stelle ineinandergreifen,

- ein Definieren (d.h. insbesondere auch ein Festlegen) von jeweils einem Quefrenzband ($q_b$) um die charakteristischen Quefrenzwerte ($q_c$) des Cepstrums ($X$),
- ein Bilden von jeweils einem skalaren Funktionswert ($I_{Cepstrum}$) für die charakteristischen Quefrenzwerte ($q_c$), und
- ein Erkennen des Verzahnungsschadens an der mindestens einen Verzahnung, jeweils durch ein Vergleichen des skalaren Funktionswerts ($I_{Cepstrum}$) mit mindestens einem Vergleichswert.

Ein Aspekt der Erfindung besteht darin, über den skalaren Funktionswert ($I_{Cepstrum}$) einen Verzahnungsschaden zu erkennen und an dem zugehörigen charakteristischen Quefrenzwerte ($q_c$) zu lokalisieren.

In einem weiteren Schritt wird die Verzahnung, an welcher der Verzahnungsschaden vorliegt, somit über den zugehörigen charakteristischen Quefrenzwert ($q_c$) lokalisiert.

In einem weiteren Schritt wird die Verzahnung, an welcher der Verzahnungsschaden vorliegt, insbesondere gekennzeichnet und/oder entfernt und/oder ausgetauscht.

"wobei die charakteristischen Quefrenzwerte ($q_c$) jene Werte des Cepstrums (X) im Quefrenzbereich angeben, an welchen das erste Zahnrad und das zweite Zahnrad an derselben Stelle ineinandergreifen" ist im Sinne der Erfindung auch zu verstehen als:

- "wobei die charakteristischen Quefrenzwerte ($q_c$) periodisch wiederkehrende Abstände angeben, an welchen das erste Zahnrad und das zweite Zahnrad an derselben Stelle ineinandergreifen",
- "wobei die charakteristischen Quefrenzwerte ($q_c$) äquidistanten Werte angeben, an welchen das erste Zahnrad und das zweite Zahnrad an derselben Stelle ineinandergreifen" und/oder
- "wobei die charakteristischen Quefrenzwerte ($q_c$) durch die [quasi] stationären/konstanten Drehzahl der Verzahnung, der ersten Anzahl an Zahnrädern und der zweiten Anzahl an Zahnrädern definiert ist (Drehzahl von Zahnrädern (oder zugehörigen Wellen und zugehörigen charakteristischen Zahneingriffsfrequenzen".

In einer Weiterbildung der Erfindung ist das Sensorsignal ausgebildet, als:

- ein Wegsignal,
- ein Geschwindigkeitssignal,
- ein Beschleunigungssignal und/oder
- ein Körperschallsignal.

Insbesondere können die genannten Sensorsignale ineinander umgerechnet werden und in umgerechneter Form für einzelne der Schritte des erfindungsgemäßen Verfahrens verwendet werden.

Alternativ ist das Sensorsignal als ein Schallsignal ausgenbildet. Hier ist es besonders empfehlenswert das erfindungsgemäße Verfahren, um Filtermethoden zu erweitern, um Rauschen aus dem Schallsignal zu entfernen.

In einer weiteren Weiterbildung der Erfindung wird die Verzahnung während dem Erfassen des Sensorsignals ($x(t)$):

- unter einer Last oder
- im Leerlauf

betrieben.

Da Verzahnungsschäden unter der Last besonders auffällig sind, ist diese Variante bevorzugt.

In einer weiteren Weiterbildung der Erfindung weist das Bilden des Cepstrums folgende Teilschritte auf:

- ein Bilden einer logarithmierten Fast Fourier Transformation des Sensorsignals,
- ein Bilden einer Inversen der logarithmierten Fast Fourier Transformation,
- ein Bilden des Cepstrums der Inversen.

In weiterer alternativen Ausführungsform erfolgt das Bilden des Cepstrums durch ein Bilden eines Betragsquadrats eines Fourier Transformation eines logarithmierten Leistungsspektrums des Sensorsignals. Das Leistungsspektrum (auch Spektrale Leistungsdichte genannt) ist definiert als die Fouriertransformation der Autokorrelationsfunktion des Signals.

In weiterer alternativen Ausführungsform erfolgt das Bilden des Cepstrums durch ein Bilden einer inversen Fourier Transformation des logarithmierten Leistungsspektrums des Sensorsignals.

In einer weiteren Weiterbildung der Erfindung sind die skalaren Funktionswerte jeweils ausgebildet als:

- ein quadratischer Mittelwert,
- eine Summe oder
- ein arithmetischer Mittelwert

des Quefrenzbandes um den charakteristischen Quefrenzwert. In einer weiteren Weiterbildung der Erfindung ist der mindestens eine Vergleichswert als ein Referenzwert ausgebildet.

Als Referenzwert ist insbesondere ein Wert zu verstehen, welcher als eine Obergrenze für den jeweiligen skalaren Funktionswert ($I_{Cepstrum}$) gilt. Der Referenzwert wird insbesondere in Abhängigkeit einer Größe und/oder weiterer Rahmenbedingungen der Verzahnung und/oder einer Größe und/oder weiterer Rahmenbedingungen einer übergeordneten Einheit, welche die Verzahnung aufweist, gesetzt.

Je kleiner der Referenzwert gesetzt wird, desto kleinere Verzahnungsschäden sind erkennbar. Je kleiner der Referenzwert gesetzt wird, desto höher ist die Wahrscheinlichkeit, dass ein Verzahnungsschaden korrekt als solcher erkannt wird. Je höher der Referenzwert gesetzt wird, desto höher ist die Wahrscheinlichkeit, dass ein Verzahnungsschaden nicht als solcher erkannt wird.

In einer weiteren Weiterbildung der Erfindung ist der mindestens eine Referenzwert ausgebildet als ein durch eine Referenzverzahnung gesetzter Wert.

Die Referenzverzahnung dient dafür eine Referenzinformation von einer vergleichbaren Verzahnung zu bieten. Die vergleichbare Verzahnung kann insbesondere auch ein reines Modell sein und nicht physisch ausgebildet sein. Die Referenzverzahnung wird insbesondere von einer anderen übergeordneten Einheit, insbesondere einem anderen Getriebe, aufgewiesen wie die mindestens eine Verzahnung.

In einer weiteren Weiterbildung der Erfindung erfolgt das Erkennen des Verzahnungsschadens an der Verzahnung durch ein Vergleichen der skalaren Funktionswerte ($I_{Cepstrum}$) untereinander.

Der mindestens eine Vergleichswert ist somit als mindestens einer der skalaren Funktionswerte ($I_{Cepstrum}$) ausgebildet. Es wird somit einer der skalaren Funktionswerte ($I_{Cepstrum}$) mit mindestens einem anderen der skalaren Funktionswerte ($I_{Cepstrum}$) verglichen. Ein skalarer Funktionswert ($I_{Cepstrum}$), welcher im Vergleich deutlich von den anderen skalaren Funktionswerten ($I_{Cepstrum}$) abweicht, insbesondere welcher deutlich höher ist, deutet insbesondere auf einen Verzahnungsschaden hin.

In einer weiteren Weiterbildung der Erfindung weist die mindestens eine Verzahnung eine erste Verzahnung und eine zweite Verzahnung auf, wobei das Erkennen des Verzahnungsschadens an der mindestens einen Verzahnung durch ein Vergleichen des skalaren Funktionswerts ($I_{Cepstrum}$) der ersten Verzahnung und des skalaren Funktionswerts ($I_{Cepstrum}$) der zweiten Verzahnung erfolgt.

Auch hier erfolgt somit ein Vergleichen der skalaren Funktionswerte ($I_{Cepstrum}$) untereinander. Es wird somit einer der skalaren Funktionswerte ($I_{Cepstrum}$) mit mindestens einem anderen der skalaren Funktionswerte ($I_{Cepstrum}$) verglichen.

In einer weiteren Weiterbildung der Erfindung wird die mindestens eine Verzahnung von mindestens einer übergeordneten Einheit aufgewiesen.

Somit existieren insbesondere mehrere übergeordnete Einheiten. Die übergeordneten Einheiten weisen jeweils eine oder mehrere Verzahnungen auf. Alle Verzahnungen werden durch das erfindungsgemäße Verfahren einbezogen und insbesondere auf Verzahnungsschäden analysiert.

In einer weiteren Weiterbildung der Erfindung ist die mindestens eine übergeordnete Einheit ausgebildet als:

- ein Getriebe,
- ein Getriebemotor,
- ein Antrieb,
- ein Motor,
- ein Rotor und/oder
- eine Maschine.

In einer weiteren Weiterbildung der Erfindung erfolgt das Erkennen des Verzahnungsschadens an der mindestens einen Verzahnung durch ein Vergleichen der skalaren Funktionswerte ($I_{Cepstrum}$) unterschiedlicher übergeordneter Einheiten.

Auch hier erfolgt somit ein Vergleichen der skalaren Funktionswerte ($I_{Cepstrum}$) untereinander. Es wird somit einer der skalaren Funktionswerte ($I_{Cepstrum}$) mit mindestens einem anderen der skalaren Funktionswerte ($I_{Cepstrum}$) verglichen.

In einer weiteren Weiterbildung der Erfindung erfolgt das Erfassen des Sensorsignals ($x(t)$):

- direkt an der mindestens einen Verzahnung und/oder
- an der mindestens einen übergeordneten Einheit.

In einer weiteren Weiterbildung der Erfindung erfolgt das Erkennen des Verzahnungsschadens an der Verzahnung durch ein Vergleichen eines ersten skalaren Funktionswerts ($I_{Cepstrum}$) der skalaren Funktionswerte ($I_{Cepstrum}$) mit den weiteren skalaren Funktionswerten ($I_{Cepstrum}$) der skalaren Funktionswerte ($I_{Cepstrum}$).

Der erste skalarer Funktionswert wird somit mit den restlichen skalaren Funktionswerten oder zumindest einem Teil davon verglichen. Ein skalarer Funktionswert ($I_{Cepstrum}$), welcher im Vergleich deutlich von den anderen skalaren Funktionswerten ($I_{Cepstrum}$) abweicht (als ein Ausreißer ausgebildet ist), insbesondere welcher deutlich höher ist, deutet insbesondere auf einen Verzahnungsschaden hin.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Zusammengefasst umfassen wesentlichen Vorteile der vorliegenden Erfindung verglichen mit den subjektiven Verfahren, auch als manuelle Verfahren bezeichenbar, des Stands der Technik:

- eine Reproduzierbarkeit der mit Verzahnungsschäden erkannten Einheiten,
- eine Transparenz in der Schadensidentifikation,
- eine Zeit- und Kostenersparnis, und
- eine Unabhängigkeit von speziellen Personalressourcen beim Erkennen von Verzahnungsschäden.

Wesentlichen Vorteile dieser Erfindung verglichen mit den objektiven Verfahren, auch als automatisierte Verfahren bezeichenbar, des Stands der Technik umfassen:

- Eine Zuordnung des schadhaften Teils, d.h. Lokalisierung, zur jeweiligen übergeordneten Einheit, insbesondere zu einer Getriebestufe auch bei mehrstufigen Getrieben, sowie eine Lokalisierung innerhalb der jeweiligen Verzahnung und
- Keine umfangreichen Trainings-Messdatensätze nötig, wie sie bei Methoden nötig wären, die künstliche Intelligenz zur Erkennung von Schäden nutzen.

KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen

Fig. 1 ein Ablaufdiagramm des erfindungsgemäßen Verfahrens, und

Fig. 2 ein Diagramm zum Erkennen des Verzahnungsschadens an der mindestens einen Verzahnung.

DETAILLIERTE BESCHREIBUNG DER ERFINDUNG

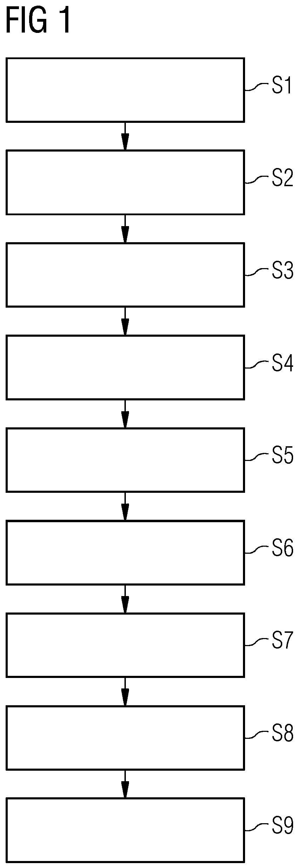

Fig. 1 zeigt ein Ablaufdiagramm des erfindungsgemäßen Verfahrens zum Erkennen eines Verzahnungsschadens an mindestens einer Verzahnung, wobei die mindestens eine Verzahnung ein ineinandergreifendes Zahnradpaar aufweist, wobei das Zahnradpaar ein erstes Zahnrad und ein zweites Zahnrad aufweist, wobei das erste Zahnrad eine erste Anzahl an Zahnrädern aufweist und wobei das zweite Zahnrad eine zweite Anzahl an Zahnrädern aufweist, mit den Schritten:

- Schritt S1: Ein Erfassen eines Sensorsignals ($x(t)$) (insbesondere über eine Zeiteinheit ($t$)) während die mindestens eine Verzahnung mit einer (quasi) konstanten (auch als stationären bezeichenbar) Drehzahl betrieben wird, (d.h. insbesondere auch "angetrieben wird" und/oder "sich in Rotation befindet")
- Schritt S2: ein Bilden (S2) eines Cepstrums des Sensorsignals, mit den Teilschritten:

    o Schritt S2a: ein Bilden einer logarithmierten Fast Fourier Transformation des Sensorsignals ($x(t)$),
    o Schritt S2b: ein Bilden einer Inversen der logarithmierten Fast Fourier Transformation,
    o Schritt S2c: ein Bilden des Cepstrums ($X$) der Inversen,

- Schritt S3: ein Bestimmen (d.h. insbesondere auch ein Berechnen und/oder ein Abrufen) von charakteristischen Quefrenzwerten ($q_c$) des Cepstrums ($X$),

    wobei die Quefrenzwerte ($q_c$) auch als Frequenzwerte im Quefrenzbereich bezeichenbar sind, wobei die charakteristischen Quefrenzwerte ($q_c$) jene Werte des Cepstrums ($X$) im Quefrenzbereich angeben, an welchen das erste Zahnrad und das zweite Zahnrad an derselben Stelle ineinandergreifen,

- Schritt S4: ein Definieren (d.h. insbesondere auch ein Festlegen) von jeweils einem Quefrenzband ($q_b$) um die charakteristischen Quefrenzwerte ($q_c$) des Cepstrums ($X$),
- Schritt S5: ein Bilden von jeweils einem skalaren Funktionswert ($I_{Cepstrum}$) für die charakteristischen Quefrenzwerte ($q_c$), wobei die skalaren Funktionswerte ($I_{Cepstrum}$) jeweils insbesondere als ein quadratischer Mittelwert des Quefrenzbandes ($q_b$) um den charakteristischen Quefrenzwert ($q_c$) ausgebildet sind,

- Schritt S6: ein Erkennen des Verzahnungsschadens an der mindestens einen Verzahnung, jeweils durch ein Vergleichen des skalaren Funktionswerts ($I_{Cepstrum}$) mit mindestens einem Vergleichswert und
- Schritt S8: ein Kennzeichnen der mindestens einen Verzahnung, an welcher der Verzahnungsschaden vorliegt.
- Schritt S9: ein Entfernen und/oder ein Austauschen der mindestens einen Verzahnung, an welcher der Verzahnungsschaden vorliegt.

Ein Aspekt der Erfindung besteht somit darin, über den skalaren Funktionswerts ($I_{Cepstrum}$) einen Verzahnungsschaden zu erkennen und an dem zugehörigen charakteristischen Quefrenzwert ($q_c$) zu lokalisieren.

Die Schritte zum Bilden der skalaren Funktionswerte ($I_{Cepstrum}$), d.h. die Schritte:

- Schritt S2: ein Bilden eines Cepstrums ($X$) des Sensorsignals ($x(t)$), mit den Teilschritten:

    o Schritt S2a: ein Bilden einer logarithmierten Fast Fourier Transformation des Sensorsignals ($x(t)$),
    o Schritt S2b: ein Bilden einer Inversen der logarithmierten Fast Fourier Transformation,
    o Schritt S2c: ein Bilden des Cepstrums ($X$) der Inversen,

- Schritt S3: ein Bestimmen (d.h. insbesondere auch ein Berechnen und/oder ein Abrufen) von charakteristischen Quefrenzwerten ($q_c$) des Cepstrums ($X$),

    wobei die Quefrenzwerte ($q_c$) auch als Frequenzwerte im Quefrenzbereich bezeichenbar sind, wobei die charakteristischen Quefrenzwerte ($q_c$) jene Werte des Cepstrums ($X$) im Quefrenzbereich angeben, an welchen das erste Zahnrad und das zweite Zahnrad an derselben Stelle ineinandergreifen,

- Schritt S4: ein Definieren (d.h. insbesondere auch ein Festlegen) von jeweils einem Quefrenzband ($q_b$) um die charakteristischen Quefrenzwerte ($q_c$) des Cepstrums ($X$),
- Schritt S5: ein Bilden von jeweils einem skalaren Funktionswert ($I_{Cepstrum}$) für die charakteristischen Quefrenzwerte ($q_c$), wobei die skalaren Funktionswerte ($I_{Cepstrum}$) jeweils als ein quadratischer Mittelwert des Quefrenzbandes ($q_b$) um den charakteristischen Quefrenzwert ($q_c$) ausgebildet sind,

können in einer Ausführungsform durch folgende Formel ausgedrückt werden:

$$I_{Cepstrum} = \sqrt{\frac{1}{N} \sum_{n=q_c-\frac{1}{2}q_b}^{q_c+\frac{1}{2}q_b} X(n)^2}$$

$X = |F^{-1}\{\log(|F\{x(t)\}|^2)\}|^2$

$q_c$ = charakteristische Quefrenz, z. B. Periodendauer einer Wellenumdrehung,

$q_b$ = Quefrenzband, um Abweichungen zu berücksichtigen

N = Anzahl der Werte

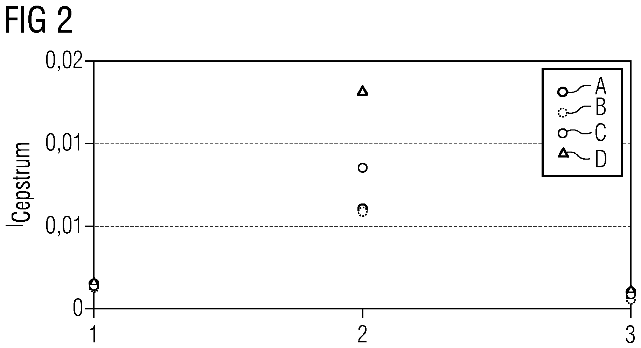

Fig. 2 zeigt eine Ausführungsform des Schritts S6: ein Erkennen des Verzahnungsschadens an der mindestens einen Verzahnung, jeweils durch ein Vergleichen des skalaren Funktionswerts ($I_{Cepstrum}$) mit mindestens einem Vergleichswert. Es ist ein Diagramm dargestellt, welches beispielhaft zum Erkennen des Verzahnungsschadens diente.

Die y-Achse zeigt Werte der skalaren Funktionswerte $I_{Cepstrum}$. An der y-Achse sind außerdem Werte aufgetragen, welche als Vergleichswert oder Referenzwert für das Vergleichen heranziehbar sind. Die x-Achse zeigt verschiedene Getriebeeinheiten 1, 2, 3, d.h. Verzahnungen 1, 2, 3 derselben übergeordneten Einheit A, B, C oder D, insbesondere ausgebildet als Antriebswelle, Motorritzel, Getriebewelle, usw. Für jede x-Achsenposition 1, 2, 3, d.h. für jede Verzahnung 1, 2, 3, sind durch die unterschiedlichen Symbole, d.h. Kreis oder Dreieck, unterschiedliche übergeordnete Einheiten A, B, C oder D dargestellt, insbesondere ein Getriebe, einen Getriebemotor, einen Antrieb, einen Motor, einen Rotor und/oder eine Maschine.

Das Dreieck bei Verzahnung 2 liegt höher als die Kreise bei 2. Der skalare Funktionswert $I_{Cepstrum}$ ist im Vergleich zu den anderen skalaren Funktionswerten $I_{Cepstrum}$ erhöht. Somit liegt bei der zu dem Dreieck zugehörigen obergeordneten Einheit an Getriebestufe 2 (Verzahnung 2) ein Verzahnungsschaden vor.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

**Patentansprüche**

1. Verfahren zum Erkennen eines Verzahnungsschadens an mindestens einer Verzahnung (1, 2, 3),

    wobei die mindestens eine Verzahnung (1, 2, 3) ein ineinandergreifendes Zahnradpaar aufweist, wobei das Zahnradpaar ein erstes Zahnrad und ein zweites Zahnrad aufweist, wobei das erste Zahnrad eine erste Anzahl an Zahnrädern aufweist und wobei das zweite Zahnrad eine zweite Anzahl an Zahnrädern aufweist, mit den Schritten:

    - Ein Erfassen (S1) eines Sensorsignals während die mindestens eine Verzahnung (1, 2, 3) mit einer konstanten Drehzahl betrieben wird,
    - ein Bilden (S2) eines Cepstrums (X) des Sensorsignals,
    - ein Bestimmen (S3) von charakteristischen Quefrenzwerten des Cepstrums (X), wobei die charakteristischen Quefrenzwerte jene Werte des Cepstrums (X) im Quefrenzbereich angeben, an welchen das erste Zahnrad und das zweite Zahnrad an derselben Stelle ineinandergreifen,
    - ein Definieren (S4) von jeweils einem Quefrenzband um die charakteristischen Quefrenzwerte des Cepstrums (X),
    - ein Bilden (S5) von jeweils einem skalaren Funktionswert ($I_{Cepstrum}$) für die charakteristischen Quefrenzwerte, und
    - ein Erkennen (S6) des Verzahnungsschadens an der mindestens einen Verzahnung (1, 2, 3), jeweils durch ein Vergleichen des skalaren Funktionswerts ($I_{Cepstrum}$) mit mindestens einem Vergleichswert.

2. Verfahren nach Anspruch 1,
   wobei das Sensorsignal ausgebildet ist, als:

    - ein Wegsignal,
    - ein Geschwindigkeitssignal,
    - ein Beschleunigungssignal und/oder
    - ein Körperschallsignal.

3. Verfahren nach einem der vorhergehenden Ansprüche,
   wobei die Verzahnung (1, 2, 3) während dem Erfassen des Sensorsignals:

    - unter einer Last oder
    - im Leerlauf

   betrieben wird.

4. Verfahren nach einem der vorhergehenden Ansprüche,
   wobei das Bilden (S2) des Cepstrums (X) folgende Teilschritte aufweist:

    - ein Bilden (S2a) einer logarithmierten Fast Fourier Transformation des Sensorsignals,

- ein Bilden (S2b) einer Inversen der logarithmierten Fast Fourier Transformation,
- ein Bilden (S2c) des Cepstrums (X) der Inversen.

5. Verfahren nach einem der vorhergehenden Ansprüche,

    wobei die skalaren Funktionswerte ($I_{Cepstrum}$) jeweils ausgebildet sind als:

        - ein quadratischer Mittelwert,
        - eine Summe oder
        - ein arithmetischer Mittelwert

    des Quefrenzbandes um den charakteristischen Quefrenzwert.

6. Verfahren nach einem der vorhergehenden Ansprüche,
wobei der mindestens eine Vergleichswert als ein Referenzwert ausgebildet ist.

7. Verfahren nach Anspruch 6,
wobei der mindestens eine Referenzwert ausgebildet ist, als ein durch eine Referenzverzahnung gesetzter Wert.

8. Verfahren nach einem der vorhergehenden Ansprüche,
wobei das Erkennen des Verzahnungsschadens an der Verzahnung (1, 2, 3) durch ein Vergleichen der skalaren Funktionswerte ($I_{Cepstrum}$) untereinander erfolgt.

9. Verfahren nach einem der vorhergehenden Ansprüche,

    wobei die mindestens eine Verzahnung (1, 2, 3) eine erste Verzahnung und eine zweite Verzahnung aufweist,
    wobei das Erkennen des Verzahnungsschadens an der mindestens einen Verzahnung (1, 2, 3) durch ein Vergleichen des skalaren Funktionswerts ($I_{Cepstrum}$) der ersten Verzahnung und des skalaren Funktionswerts ($I_{Cepstrum}$) der zweiten Verzahnung erfolgt.

10. Verfahren nach einem der vorhergehenden Ansprüche,
wobei die mindestens eine Verzahnung (1, 2, 3) von mindestens einer übergeordneten Einheit (A, B, C, D) aufgewiesen wird, wobei die mindestens eine übergeordnete Einheit (A, B, C, D) insbesondere ausgebildet ist als:

    - ein Getriebe,
    - ein Getriebemotor,

- ein Antrieb,
- ein Motor,
- ein Rotor und/oder
- eine Maschine.

11. Verfahren nach 10,
wobei das Erkennen des Verzahnungsschadens an der mindestens einen Verzahnung (1, 2, 3) durch ein Vergleichen der skalaren Funktionswerte ($I_{Cepstrum}$) unterschiedlicher übergeordneter Einheiten (A, B, C, D) erfolgt.

12. Verfahren nach Anspruch 10 oder 11,

    wobei das Erfassen des Sensorsignals:

        - direkt an der mindestens einen Verzahnung (1, 2, 3) und/oder
        - an der mindestens einen übergeordneten Einheit (A, B, C, D)

    erfolgt.

13. Verfahren nach einem der vorhergehenden Ansprüche,
wobei das Erkennen des Verzahnungsschadens an der Verzahnung (1, 2, 3) durch ein Vergleichen eines ersten skalaren Funktionswerts ($I_{Cepstrum}$) der skalaren Funktionswerte ($I_{Cepstrum}$) mit den weiteren skalaren Funktionswerten ($I_{Cepstrum}$) der skalaren Funktionswerte ($I_{Cepstrum}$) erfolgt.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

FIG 1

S1

S2

S3

S4

S5

S6

S7

S8

S9

FIG 2

**Europäisches Patentamt**
**European Patent Office**
**Office européen des brevets**

# EUROPÄISCHER RECHERCHENBERICHT

**Nummer der Anmeldung**

**EP 23 20 6431**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 072 975 A1 (SIEMENS AG [DE]; GRAM & JUHL AS [DK]) 24. Juni 2009 (2009-06-24) | 1-6,8, 10,12-15 | INV. G01M13/021 |
| Y | * das ganze Dokument * | 7,11 | G01M13/028 |
| A | * Abbildungen 1-3,6,7 * * Ansprüche * ----- | 9 | G01N29/14 |
| Y | DE 101 44 076 A1 (DAIMLER CHRYSLER AG [DE]) 27. März 2003 (2003-03-27) * das ganze Dokument * * Absätze [0042], [0052] * ----- | 7,11 | |

**RECHERCHIERTE SACHGEBIETE (IPC)**

G01M
F16H
G01N

Der vorliegende Recherchenbericht wurde für alle Patentansprüche erstellt

| Recherchenort | Abschlußdatum der Recherche | Prüfer |
|---|---|---|
| Den Haag | 9. April 2024 | Stavroulis, Stefanos |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 20 6431**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**09-04-2024**

| Im Recherchenbericht angeführtes Patentdokument | Datum der Veröffentlichung | Mitglied(er) der Patentfamilie | Datum der Veröffentlichung |
|---|---|---|---|
| EP 2072975 A1 | 24-06-2009 | CN 101464212 A | 24-06-2009 |
| | | EP 2072975 A1 | 24-06-2009 |
| | | US 2009162186 A1 | 25-06-2009 |
| DE 10144076 A1 | 27-03-2003 | DE 10144076 A1 | 27-03-2003 |
| | | EP 1423827 A2 | 02-06-2004 |
| | | ES 2305277 T3 | 01-11-2008 |
| | | JP 4052469 B2 | 27-02-2008 |
| | | JP 2005504272 A | 10-02-2005 |
| | | US 2005049835 A1 | 03-03-2005 |
| | | WO 03023721 A2 | 20-03-2003 |

EPO FORM P0461

Für nähere Einzelheiten zu diesem Anhang : siehe Amtsblatt des Europäischen Patentamts, Nr.12/82